Europäisches Patentamt

European Patent Office

Office européen des brevets

(19)

(11) Veröffentlichungsnummer : **0 440 886 B1**

(12) # EUROPÄISCHE PATENTSCHRIFT

(45) Veröffentlichungstag der Patentschrift :
09.12.92 Patentblatt 92/50

(51) Int. Cl.⁵ : **B01J 8/44,** B01J 8/24

(21) Anmeldenummer : **90120354.7**

(22) Anmeldetag : **24.10.90**

(54) **Wirbelbett-Reaktors.**

(30) Priorität : **12.01.90 DE 4000718**

(43) Veröffentlichungstag der Anmeldung :
**14.08.91 Patentblatt 91/33**

(45) Bekanntmachung des Hinweises auf die
Patenterteilung :
**09.12.92 Patentblatt 92/50**

(84) Benannte Vertragsstaaten :
**AT BE CH DE ES FR GB IT LI LU NL SE**

(56) Entgegenhaltungen :
**EP-A- 0 280 016**
**EP-A- 0 351 247**

(73) Patentinhaber : **MAN Gutehoffnungshütte**
**Aktiengesellschaft**
**Bahnhofstrasse 66 Postfach 11 02 40**
**W-4200 Oberhausen 11 (DE)**

(72) Erfinder : **Haacker, Heinz**
**Friedhofsweg 24**
**W-5910 Kreuztal (DE)**
Erfinder : **Malik, Ernst J.**
**Anhalterstrasse 8**
**W-4200 Oberhausen 11 (DE)**
Erfinder : **Schmidt, Rainer, Dipl.-Ing.**
**Oskarstrasse 24**
**W-4200 Oberhausen 11 (DE)**

EP 0 440 886 B1

Jouve, 18, rue Saint-Denis, 75001 PARIS

**Beschreibung**

Die Erfindung betrifft einen liegenden Wirbelbett-Reaktor mit einem Anströmboden nach dem Oberbegriff des Patentanspruches.

Der Anströmboden hat die Aufgabe, das Fluidisiermedium über die gesamte Grundfläche eines Wirbelbettes zu verteilen. Er besteht in der Regel aus Zuführungsleitungen, durch die das Fluidisiermedium zugeführt wird, den Sammlerrohren und den Anströmrohren mit den Austrittsöffnungen bzw. Austrittsdüsen für das Medium.

Bekannt ist ein Gasgenerator, bestehend im wesentlichen aus einem horizontal angeordneten, langgestreckten Druckbehälter, der den Reaktionsraum, der unter Überdruck und hoher Temperatur steht, umschließt. Der Stahlmantel des Druckbehälters weist zum Schutz gegen die im Behälterinneren herrschende hohe Temperatur eine Wärmedämmung aus feuerfestem Material auf. Der bekannte Gasgenerator ist aus vier gleichartigen Modulen zusammengesetzt. Im unteren Bereich eines jeden Moduls ist der Stutzen für das Fluidisiermedium, hier Dampf bzw. im Kreislauf rückgeführtes Rohgas, angeordnet. Das Fluidisiermedium wird über den Anströmboden auf der Innenseite der feuerfesten Ausmauerung verteilt und wirbelt die in den Generator eingeführte Kohle zu einem Wirbelbett auf. In dem Wirbelbett findet die eigentliche Vergasungsreaktion statt.

Der im Bodenbereich des Reaktors des Standes der Technik liegende Anströmboden weist Anströmrohre auf.

Diese Anströmrohre, die in Umfangsrichtung des Druckbehälters angeordnet sind, werden durch ein Unterstützungssystem aus Sammlerrohren gehalten, das seinerseits in der Behälterauskleidung bzw. am stabilen Stahlmantel des Druckbehälters gelagert ist.

Für die Lagerung des Anströmbodens des Standes der Technik sind mehrere Mauerungsdurchbrüche erforderlich, die ihrerseits Wärmebrücken bilden. Außerdem muß die Unterstützungskonstruktion infolge Dehnungsdifferenzen an den Lagerungen Zusatzspannungen aufnehmen.

Bei der Vorrichtung zum Eindüsen eines gasförmigen Mediums für einen Wirbelschichtprozeß nach der EP-A-0 280 016 ist an ein vertikales Zuführrohr, das mit einer außerhalb des Wirbelschichtfeuerraumes befindlichen Luftversorgung verbunden ist, ein horizontales Verteilerrohr angeschlossen. Von diesem horizontalen Verteilerrohr zweigen nach beiden Seiten mehrere Düsenrohre ab, die eine Lage einnehmen, die innerhalb eines geraden Kegels oder auf dem Kegel liegt, dessen Kegelachse rechtwinklig auf das Verteilerrohr gerichtet ist und in einer horizontalen Ebene liegt.

Ausgehend von dem letztgenannten Stand der Technik ist es Aufgabe der Erfindung, einen liegenden Wirbelbett-Reaktor mit einem Anströmboden zu schaffen, bei dem dieser Anströmboden konstruktiv einfach, statisch zuverlässig ausgeführt und gelagert ist, sich auch für großflächige Ausbildung eignet und Wärmedehnungen der Anströmrohre schadlos zuläßt. Die erfindungsgemäße Aufgabenlösung ist in dem Patentanspruch angegeben.

Demnach wird der Anströmboden nur an einem Punkt, nämlich am Durchtritt der zentral angeordneten Fluidisiermedium-Zuführungsleitung im Behälterstutzen des liegenden Druckbehälters gelagert. Von der Zuführungsleitung zweigen in Umfangsrichtung des Druckbehälters zwei Sammlerrohre ab, an denen die in Längsrichtung des Behälters liegenden Anströmrohre angeschlossen sind. Im Bereich der frei liegenden Enden der Anströmrohre sind diese in Querträgern gehalten, die wiederum von Längsträgern gestützt werden. Diese Längsträger sind fest an der Fluidisiermedium-Zuführungsleitung angeschlossen.

Die Anströmrohre sind in der Regel in den Querträgern nicht befestigt, sondern frei beweglich geführt. Wenn die Gewähr gegeben ist, daß die Temperatur in den Anströmrohren und außerhalb derselben annähernd gleich bleibt, könnte auch eine Befestigung der Rohre an den Querträgern erfolgen.

Je nach Länge der frei liegenden Anströmrohre können zusätzliche Querträger angeordnet werden.

Die Werkstoffe der für den Anströmboden verwendeten Bauelemente, wie Zuführungsleitung, Sammlerrohre, Anströmrohre und Träger sollten gleiche oder annähernd gleiche Wärme-Ausdehnungskoeffizienten aufweisen.

Die Abdichtung einer durch einen Reaktorbehälterstutzen hindurchgeführten heißgehenden Rohrleitung ist in der DE-C-3 823 810 beschrieben.

Ein Ausführungsbeispiel der Erfindung wird an Hand der schematischen Zeichnung näher erläutert.

Die einzige Patentfigur zeigt ausschnittsweise den erfindungsgemäßen Anströmboden in perspektivischer Darstellung.

Am Durchtritt der zentralen Zuführungsleitung (1) für das Fluidisiermedium im Behälterstutzen (7) eines Druckbehälters (6) ist der Anströmboden gelagert. Vom Druckbehälter (6) erkennt man lediglich den Bereich des Anschlusses des Behälterstutzens (7), der an den Stahlmantel des Druckbehälters angeschweißt ist. Im Inneren von Behälterstutzen und Druckbehälter-Stahlmantel ist die feuerfeste Ausmauerung angedeutet.

Von der Zuführungsleitung (1) gehen in Umfangsrichtung des Druckbehälters (6) zwei Sammlerrohre (2) ab. An diese Sammlerrohre schließen sich in Längsrichtung des liegenden Druckbehälters eine Vielzahl von Anströmrohren (3) an. Die Anströmrohre (3) liegen in mit kreisrunden Ausnehmungen versehenen Querträgern (5) auf. Die Querträger (5) werden von Längsträgern (4) gehalten, die fest an der zentralen Zuführungsleitung (1) angeordnet sind.

Die Anströmrohre weisen (nicht dargestellte) Austrittsbohrungen für das Fluidisiermedium auf, die zweckmäßigerweise auf der Unterseite der Rohre angeordnet sind, um ein Eindringen vom Wirbelgut bei Betriebsstillstand zu vermeiden.

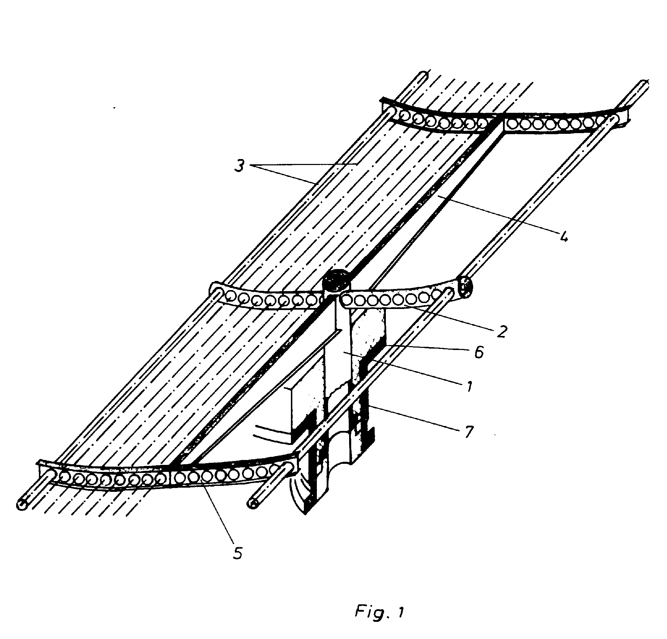

## Patentansprüche

1. Liegender Wirbelbett-Reaktor mit einem Anströmboden, im wesentlichen bestehend aus den Fluidisiermedium-Zuführungsleitungen, den Sammlern und den Anströmrohren, wobei der Anströmboden an der zentralen Fluidisiermedium-Zuführungsleitung gelagert ist und wobei an die Fluidisiermedium-Zuführungsleitung ein Sammler angeschlossen ist, von dem sich beidseitig Anströmrohre erstrecken,
dadurch gekennzeichnet,
daß von der Fluidisiermedium-Zuführungsleitung (1) in Umfangsrichtung des Druckbehälters (6) zwei Sammelrohre (2) abzweigen, an die beidseitig in Längsrichtung des Druckbehälters (6) Anströmrohre (3) angeschlossen sind, wobei die Anströmrohre (3) anderenends jeweils in wenigstens einem Querträger (5) aufliegen und daß Querträger (5) von Längsträgern (4) gehalten werden, welche an der Zuführungsleitung (1) angeschlossen sind.

## Claims

1. Horizontal fluidised bed reactor with an incident flow deck, essentially consisting of the fluidising medium supply pipes, the collectors and the incident flow pipes, wherein the incident flow deck is mounted on the central fluidising medium supply pipe and wherein connected to the fluidising medium supply pipe is a collector from which incident flow pipes extend on both sides, characterised in that two manifolds (2) to which incident flow pipes (3) are connected on both sides in the longitudinal direction of the pressure vessel (6), branch off from the fluidising medium supply pipe (1) in the circumferential direction of the pressure vessel (6), wherein the incident flow pipes (3) at the other end each rest in at least one transverse support (5), and transverse supports (5) are held by longitudinal supports (4) which are connected to the supply pipe (1).

## Revendications

1. Réacteur horizontal à lit fluidisé avec plancher de soufflage, comportant essentiellement des conduites d'amenée d'agent fluide, des collecteurs et des tubes de soufflage, le plancher de soufflage étant porté par la conduite centrale d'amenée à laquelle est raccordé un collecteur à partir duquel les tubes de soufflage sont répartis de chaque côté, caractérisé en ce que deux tubes collecteurs (2) partent de la conduite d'amenée (1) de l'agent fluide, dans la direction périphérique du récipient sous pression (6), les tubes de soufflage disposés selon la direction longitudinale du réacteur, des deux côtés étant raccordés aux deux collecteurs (2) et reposant par chacune de leurs extrémités sur au moins un support transversal (5), ces supports transversaux étant eux-mêmes portés par des supports longitudinales (4) raccordés à la conduite d'amenée (1).

Fig. 1